# EUROPÄISCHE PATENTANMELDUNG

(11) **EP 3 503 088 A1**
(43) Veröffentlichungstag der Anmeldung: **26.06.2019**
(21) Anmeldenummer: 17020587.6
(22) Anmeldetag: 21.12.2017
(51) Int. Cl.: G10K 11/18, G10K 11/16, H04K 3/00, H04W 12/02, H04B 1/3888

(54) **SCHUTZVORRICHTUNG**

(71) Anmelder: KARDA Projektentwicklung & Beratung OHG, 22547 Hamburg (DE)
(72) Erfinder: Die Erfindernennung liegt noch nicht vor
(74) Vertreter: König Szynka Tilmann von Renesse Patentanwälte Partnerschaft mbB

(57) **Zusammenfassung**

Die Erfindung betrifft eine Schutzvorrichtung, die einerseits bei Bedarf die durch einen Sensor eines elektronischen Geräts 2 erfassbaren Signale aus einer Umgebung schwächt und damit eine Umgebungserfassung durch den Sensor unterbindet und andererseits bei Bedarf mittels einer elektronischen Einrichtung 3.1 eine Benutzung des elektronischen Geräts 2 über den Sensor ermöglicht.

## Beschreibung

Diese Erfindung betrifft eine Schutzvorrichtung, mit der die Erfassung von Signalen einer Umgebung durch einen Sensor eines elektronischen Geräts bei Bedarf unterbunden und wieder ermöglicht werden kann, sowie deren Verwendung.

Elektronische Geräte einschließlich Geräte mit lediglich einem elektronischen Teil verfügen zunehmend über Sensoren zur Erfassung eines Umgebungssignals. Damit sind Mikrofone zur Schallaufnahme, Helligkeitssensoren zur Erfassung von insbesondere sichtbarem Licht und Kameras zur Erfassung von bewegten oder unbewegten Bildern gemeint. Beispielsweise verfügen moderne Mobiltelefone nicht nur über eine klassische Freizeitkamera ersetzende Kameras zur Aufnahme von Fotos der Umgebung durch den Nutzer, sondern in vielen Fällen auch über zusätzliche Kameras zur Erfassung des Nutzers während der Benutzung des Mobiltelefons, beispielsweise für die Videotelefonie oder zur Identifikation. Das Gleiche gilt für größere Geräte, also mobile digitale Assistenten, und Computer wie Laptops, PCs, Workstations, im Allgemeinen, sowohl im nichtmobilen wie im mobilen Fall. Außerdem werden in jüngster Zeit zunehmend elektronische Brillen in den Markt gebracht, mit denen der Nutzer eine "virtuelle Realität" erleben kann und die ihrerseits Kameras aufweisen. Auch Fernsehgeräte, Spielekonsolen, Spielzeug und andere Geräte werden zunehmend interaktiv. Wenn nicht klassische Kameras zur Bildaufnahme vorgesehen sind, dann aber möglicherweise Kameras zur Erfassung einer Gestensteuerung oder in manchen Fällen einfache Helligkeitssensoren, etwa um den Einschaltzustand einer Beleuchtung oder Tageslicht zu erfassen. Überdies können in sehr vielen Fällen Mikrofone vorhanden sein.

Viele Nutzer sind einerseits an dem erhöhten Leistungsumfang solcher Geräte interessiert und nutzen die dadurch entstehenden Komfortfunktionen gern. Andererseits bedeuten solche Geräte, insbesondere wenn sie über eine Datenverbindung mit anderen Einrichtungen oder dem Internet in Verbindung stehen (oder das nicht ausgeschlossen werden kann), einen Verlust an Privatsphäre und Vertraulichkeit. Das gilt um so mehr, als die Geräte oder mit ihnen z. B. über das Internet verbunden Dienste und Dienstanbieter zunehmend mehr "Intelligenz" enthalten, also z. B. in der Lage sind, Benutzergesten zu erkennen, Gesichter zu unterscheiden, menschliche Sprache zu entschlüsseln etc.. Manche Geräte haben auch genau und nur diese Funktion, bilden also Schnittstellen zum Benutzer, mit denen dieser über eine Datenverbindung Eingaben in ein gar nicht mehr zu seinem Haushalt oder seiner Sphäre gehörendes System vornehmen kann. Beispielsweise gibt es spezielle Geräte des Internetversenders Amazon, die durch Sprachbefehle Kaufaufträge entgegennehmen. Hinzu kommt, dass alle diese Geräte, wie auch die damit verbundene IT-Infrastruktur der Unternehmen über sehr große und zunehmende Datenspeicher- und Verarbeitungskapazität verfügen und die so gewonnenen Daten nutzen.

Die Erfindung basiert auf dem technischen Problem, die Nutzungsmöglichkeiten solcher Geräte durch den Benutzer zu verbessern.

Gelöst wird dieses Problem durch eine Schutzvorrichtung zum Unterbinden der Erfassung von Signalen einer Umgebung durch einen Sensor eines elektronischen Geräts, mit einer Abdeckung für zumindest den Sensor, welche durch den Sensor erfassbare Signale schwächt, und einer elektronischen Einrichtung, die ansprechend auf eine Steuerung eines Nutzers eine Benutzung des Geräts mittels des Sensors ermöglichen kann.

Die Grundidee der Erfindung liegt darin, mit einer Schutzvorrichtung die Signalerfassung durch den Sensor, also z. B. die Bilderfassung durch eine Kamera oder die Schallerfassung durch ein Mikrofon, in solchem Maß zu schwächen oder zu stören, dass der Eingriff in die Privatsphäre ausgeschlossen oder jedenfalls wesentlich geschwächt ist, z. B. also nur ganz besonders laute Schallsignale oder an sich die Existenz von Stimmen, aber nicht der Inhalt der Sprache, erfasst werden kann. Dazu sieht die erfindungsgemäße Schutzvorrichtung zunächst eine Abdeckung für zumindest den Sensor des elektronischen Geräts vor, die die entsprechenden Umgebungssignale schwächt oder unterdrückt, also z. B. eine weitgehend blickdichte und/oder in gewissem Umfang schallisolierende Abdeckung.

Darüber hinaus verfügt die Schutzvorrichtung über eine elektronische Einrichtung, die gesteuert durch den Nutzer wahlweise dennoch eine Benutzung, insbesondere Bedienung des von der Abdeckung erfassten Geräts ermöglicht. Diese elektronische Einrichtung kann nach einer bevorzugten Variante die Signalabschwächung durch die Abdeckung gewissermaßen überbrücken, also einen weiteren Sensor außerhalb der Abdeckung verbinden mit einer Einrichtung zur Abgabe entsprechender Signale innerhalb der Abdeckung (aus der Perspektive des elektronischen Geräts bzw. dessen Sensors). Z. B. kann ein Mikrofon außerhalb der Abdeckung Schallsignale erfassen und an einen Lautsprecher innerhalb der Abdeckung weitergeben, der diese Schallsignale, wenn der Nutzer das wünscht und eine entsprechende Bedienungseinstellung vorgenommen hat, an den Sensor des elektronischen Geräts weitergibt. Auf Wunsch des Nutzers wird damit die eigentlich zu blockierende Umgebungserfassung durch das elektronische Gerät wieder ermöglicht, also z. B. eine akustische Verbindung zwischen Sprachbefehlen eines Nutzers und dem Sensor des elektronischen Geräts innerhalb oder unter der Abdeckung hergestellt.

In dieser Situation soll also das elektronische Gerät die vorgesehenen Funktionen ausüben, beispielsweise Sprachbefehle des Nutzers aufnehmen und dementsprechend reagieren, ein Bestellsignal an einen Internetversender abschicken, sich oder ein anderes Gerät einschalten usw. Ohne eine entsprechende Bedienung der erfindungsgemäßen Schutzvorrichtung allerdings sind die genannten Funktionen blockiert, auch wenn der blockierte Sensor des elektronischen Geräts eigentlich erfassungsbereit ist.

In anderen Worten kann der Nutzer durch eine Bedienung der erfindungsgemäßen Schutzvorrichtung sicherstellen, wann seine Privatsphäre geschützt sein soll und wann er die eigentlichen Funktionen des von der Schutzvorrichtung betroffenen Geräts nutzen möchte. Das ist erstens relevant, weil die Funktion der Signalsteuerung (z. B. durch Sprache) der hier beschriebenen Geräte, voraussetzt, dass diese Geräte immer "mithören" und auch weil sich viele Geräte gar nicht mehr ohne Weiteres ausschalten lassen (bzw. nach Trennen einer Netzverbindung mühsam wieder hochgefahren werden müssen), zweitens wegen Akkubetrieb oft auch ohne Netzbetrieb nicht garantiert völlig außer Funktion sind und damit nicht frei von dem Verdacht bleiben, ungewünschterweise die Umgebung zu erfassen. "Erfassen" bedeutet dabei "Zusehen oder Zuhören" oder einfach nur Feststellen, ob Menschen anwesend sind oder nicht, Licht eingeschaltet ist oder nicht etc..

Bei einer weiteren bevorzugten Ausführungsform, die alternativ oder zusätzlich vorgesehen sein kann, ist eine Störsignaleinrichtung vorgesehen, die mit ihrem Störsignal die Umgebungserfassung durch den Sensor des elektronischen Geräts stört. Beispielsweise kann die Schutzvorrichtung dazu Schallsignale aus der Umgebung erfassen und (gegenphasigen) "Antischall" abgeben, sodass im Bereich des zu störenden Sensors eine Überlagerung der ursprünglichen Schallsignale aus der Umgebung und des gegenphasigen "Antischalls" ankommt. Das kann eine Entschlüsselung der Umgebungsschallsignale verhindern, jedenfalls sehr weitgehend, und damit z. B. die schwächende Funktion der Abdeckung ergänzen. Die Abdeckung ist allerdings in einem gewissen Maß auch bei dieser Version gewünscht, weil sie die Funktion der Schutzvorrichtung unterstützt und z. B. auch eine Störung der Umgebung durch die Antischallsignale begrenzen oder verhindern kann.

Analoges gilt für einfache Störsignale, also z. B. ein gezielt auf den Sensor des elektronischen Geräts (ein Mikrofon) gerichtetes Tonsignal, das das zu erfassende Umgebungsgeräusch schlicht überlagert. In gleicher Weise kann natürlich eine Lichtquelle der Schutzvorrichtung einen Helligkeitssensor oder eine Kamera blenden bzw. sonst zu erfassende Licht- oder Bildsignale überlagern. Allerdings wird in solchen Fällen eine blickdichte Abdeckung in der Regel genügen (wenn nicht etwa ein üblicher Wechsel von Hell und Dunkel suggeriert werden soll).

In beiden Fällen, ob nun zu erfassende Signale an den Sensor des elektronischen Geräts durch die Abdeckung hindurch übertragen werden oder eine Störsignaleinrichtung ausgeschaltet wird, kann jedenfalls der Nutzer durch die Bedienung der elektronischen Einrichtung zum Ermöglichen der Benutzung darüber bestimmen, wann das elektronische Gerät, das die Schutzvorrichtung betrifft, mit einem Sensor (einer Kamera, einem Mikrofon, einem Helligkeitssensor) die Umgebung erfassen kann und wann nicht. Im einen Fall wird gewissermaßen eine Überbrückung einer Abdeckung bzw. Isolierung ermöglicht und im anderen Fall ein Störsignal ausgeschaltet, wobei beide Varianten im Prinzip auch kombiniert sein können.

Nach einer weiteren bevorzugten Ausgestaltung ist die erfindungsgemäße Schutzvorrichtung zusätzlich zu der die erfassbaren Signale schwächenden Abdeckung dazu ausgelegt, Steuerbefehle des Nutzers zu erfassen, also außerhalb der Abdeckung, und in veränderte Steuerbefehle umzuwandeln, die an den (durch die Abdeckung auch hinsichtlich der direkten Erfassung einer Nutzerbedienung außer Funktion gesetzten) Sensor weitergegeben werden. Dabei können z. B. Sprachbefehle im Wortlaut bzw. Inhalt geändert werden. Bspw. kann die "Einrichtung" zum Ermöglichen der Bedienung" insoweit einen anderen oder erweiterten Sprachbefehlkatalog aufweisen und einen von ihr verstandenen Sprachbefehl des Nutzers in einen für das elektronische Gerät spezifischen Sprachbefehl übersetzen und an den Sensor, etwa ein Mikrofon, weitergeben. Auch können Sprachbefehle in Lichtsignale oder allgemeiner gesprochen Befehle oder Bedienoperationen in einem Medium zu solchen in einem anderen Medium umgesetzt werden.

Genauso wie bei der zuvor beschriebenen Überbrückung der Abdeckung bzw. ihrer Signalschwächung ergibt sich auch der Vorteil, dass, wenn gewünscht, ausschließlich klare als solche definierte und erkennbare Befehle weitergegeben werden und der Sensor ansonsten an der Umgebungserfassung gehindert ist. Das gilt natürlich bei veränderten Befehlen genauso wie bei unverändert und durch Überbrückung weitergereichten Befehlen, und zwar dann, wenn die erfindungsgemäße Schutzvorrichtung Befehle als solche erkennen und damit sortieren kann.

Vorzugsweise ist die Einrichtung zum Ermöglichen der Benutzung außerdem dazu ausgelegt, von dem elektronischen Gerät abgegebene Signale zu erfassen und nach außen weiterzugeben. Dazu kann sie eine entsprechende Erfassungseinrichtung, etwa ein Mikrofon und/oder eine Kamera, zur Erfassung dieser innen auftretenden Signale aufweisen und natürlich auch eine Abgabeeinrichtung, etwa einen Lautsprecher oder einen Monitor, zur Weitergabe an den Nutzer außen. Insgesamt ist damit eine bidirektionale Kommunikation möglich. Der Nutzer kann also nicht nur Befehle an das elektronische Gerät weitergeben bzw. es kann nicht nur das elektronische Gerät z. B. ein Videosignal oder eine andere Erfassung der Umgebung aufnehmen, sondern der Nutzer kann auch rezipieren, welche Rückmeldung oder auch welches einer Benutzung vorausgehende Signal das elektronische Gerät abgibt, beispielsweise eine akustische Nachricht oder eine Bildanzeige oder im einfachsten Fall einen Signalton oder ein einfaches Lichtsignal (das dann auch durch eine äußere Lichtquelle weitergegeben werden könnte). Vorzugsweise schränkt also die Schutzvorrichtung die Kommunikation zwischen dem Nutzer und dem Gerät möglichst wenig ein, und jedenfalls ist die Herstellung einer Kommunikation in zwei Richtungen angestrebt.

Die in Betracht kommenden elektronischen Geräte mit einschlägigen Sensoren sind unterschiedlichster Art und damit auch verschiedener Gestalt sowie Größe. Die Schutzvorrichtung, konkret ihre Abdeckung, kann daran angepasst sein. Bei kleinen Geräten, beispielsweise einem Mobiltelefon, kann die Abdeckung eine Umhüllung bilden, also im Verwendungsfall das elektronische Gerät vollständig abdecken (natürlich unter Berücksichtigung eines Bodens, einer Ablage oder einer Wand, auf oder an dem/der das elektronische Gerät positioniert ist). Z. B. könnte die Abdeckung eine Haube sein, die über ein Mobiltelefon oder Notebook oder z. B. ein einschlägiges Gerät eines Online-Dienstanbieters oder Händlers gestülpt wird. In Betracht kommen auch Hüllen oder Taschen, in die das Gerät eingesteckt wird.

Im anderen Fall besonders großer Geräte kann es viel sinnvoller sein, nur den Bereich des Geräts abzudecken, der den einschlägigen Sensor aufweist, etwa einen entsprechenden Teil in einer Bedienungsfront eines Fernsehgeräts oder z. B. eines Kühlschranks (mit sogenannten smarten Funktionen). Dabei kann die Abdeckung auch beweglich sein, also nicht nur abgenommen, sondern im angebrachten Zustand z. B. auch zur Seite geklappt werden.

Vorzugsweise weist die erfindungsgemäße Schutzvorrichtung eine Sprachsteuereinrichtung auf, die der Nutzer über Sprachbefehle ansprechen kann und die diese "versteht" und umsetzen kann. Das gilt optional für die Weitergabe von Sprachbefehlen an eine Sprachsteuereinrichtung in dem betroffenen elektronischen Gerät, wobei dies grundsätzlich ja auch ohne Erkennung der Sprachsteuerbefehle durch die Schutzvorrichtung möglich ist, soweit diese hinsichtlich der Überbrückung in Funktion gesetzt wurde. Aber auch das "Einschalten" der Schutzvorrichtung, also die Herstellung der Überbrückung an sich bzw. die Beendigung der Störsignalerzeugung, können vorzugsweise durch Sprachbefehle initialisiert werden, die die Schutzvorrichtung selbst versteht. Gleiches gilt natürlich entsprechend für das "Ausschalten" .

Ergänzend kann die Schutzvorrichtung auch über die Funktion verfügen, Signalbefehle (z.B. Sprache) des Nutzers zu erfassen und auch zu verändern, um z.B. einen selbst gewählten Befehl des Nutzers in den vom elektronischen Gerät verwendeten z.B. Aktivierungsbefehl zu übersetzen. Als Beispiel sei hier angeführt, z.B. den Nutzer-gewählten Befehl "Fang an" zu erfassen (und vom elektronischen Gerät abzuschirmen) und zeitgleich an den Sensor des elektronischen Geräts z. B. im Falle des Amazon-Alexa-Geräts den Befehl "Alexa" auszugeben.

Eine weitere bevorzugte Variante kann eine Zeitschaltfunktion aufweisen, die nach Ablauf einer bestimmten und vorzugsweise einstellbaren Zeit nach der letzten Bedienaktion die Schutzvorrichtung wieder "ausschaltet", also den Schutzzustand wiederherstellt. Damit kann verhindert werden, dass der eigentliche Zweck der Schutzvorrichtung nicht erfüllt wird, weil und wenn der Benutzer eine entsprechende Bedienung vergisst.

Gemäß einer weiteren bevorzugten Ausgestaltung weist die Schutzvorrichtung eine Schnittstelle auf, um z. B. Updates aufspielen zu können. Grundsätzlich kann diese Schnittstelle unterschiedlichen Typs sein, z. B. als schnurlose WLAN-, Bluetooth-, DECT-Schnittstelle, oder leitungsgebunden, etwa als USB- oder LAN-Anschluss. Leitungsgebundene Varianten sind bevorzugt, weil in diesen Fällen durch den Benutzer eindeutig (gewissermaßen mechanisch durch Steckerabziehen) sichergestellt werden kann, dass die Schutzvorrichtung nicht etwa ihrerseits unbemerkt einen Datenabfluss ermöglicht.

Grundsätzlich ist es bevorzugt, die Schutzvorrichtung "offline" auszugestalten, also ohne Einrichtung zur Internetverbindung und vorzugsweise auch ohne Einrichtung zur drahtlosen Kommunikation über elektromagnetische Strahlung (abgesehen natürlich von einer denkbaren Gestensteuerung, also letztlich einer Art von Bilderkennung mit sichtbarem Licht). Damit kann ausgeschlossen werden, dass die Schutzvorrichtung entgegen ihrem originären Zweck ihrerseits beispielsweise unbemerkt "gehackt" wird, also in ihrer Funktion durch Dritte gesteuert wird, die dann die Funktion der Schutzvorrichtung aussetzen oder durch diese erfasste (z. B. Schall-) Signale abgreifen könnten.

Eine weitere bevorzugte Ausgestaltung sieht einen elektrischen Netzanschluss der Schutzvorrichtung vor und gleichzeitig eine Ladeeinrichtung, mit der das von der Schutzvorrichtung betroffene Gerät geladen werden kann. Z. B. könnte eine Haube oder Hülle für ein Mobiltelefon einen entsprechenden Anschluss (auch z.B. per Induktion) zum Laden des Mobiltelefons aufweisen, sodass die Zeit, in der das Mobiltelefon in oder unter der Schutzvorrichtung liegt, zum Laden genutzt werden kann. Die Schutzvorrichtung hat damit eine weitere Funktion.

Schließlich kann die Schutzvorrichtung in einer Weise formveränderlich sein, die eine Anpassung an verschieden geformte oder unterschiedlich große elektronische Geräte ermöglicht. Z. B. kann ein Teil der Schutzvorrichtung zusammenfaltbar und auseinanderfaltbar sein, sodass die Schutzvorrichtung einerseits etwa über einen großen Monitor oder ein Fernsehgerät gelegt werden kann, andererseits aber auch in kleineren Ausmaßen verstaut oder über kleinere Geräte, etwa ein Notebook, gelegt werden kann.

Die Erfindung wir im Folgenden anhand verschiedener Ausführungsbeispiele näher erläutert.
- Figuren 1 bis 7: zeigen jeweils schematisch und im Schnitt ein jeweiliges Ausführungsbeispiel, wobei die Abdeckung als Haube ausgeführt ist;
- Figuren 8 und 9: zeigen ein weiteres Ausführungsbeispiel mit einer Abdeckklappe;
- Figur 10: zeigt noch ein Ausführungsbeispiel mit einer flexiblen Abdeckhaube;
- Figur 11: zeigt ein letztes Ausführungsbeispiel mit einer Kamera und einem Monitor.

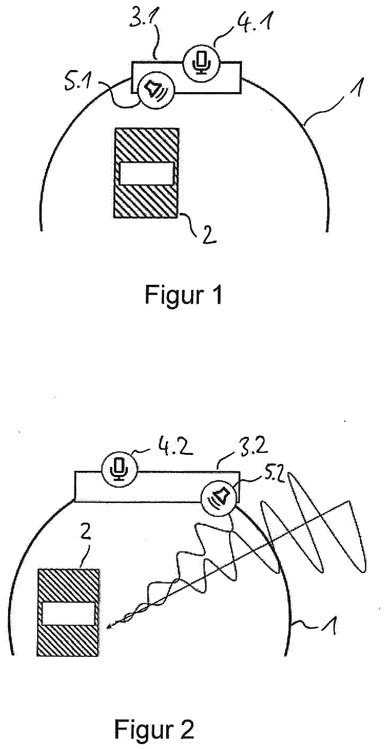

Bei dem in Figur 1 dargestellten ersten Ausführungsbeispiel weist die erfindungsgemäße Schutzvorrichtung eine in der Figur als kugelförmig dargestellte Haube 1 auf, die blickdicht ist und mit einem schalldämmenden Schaummaterial beschichtet ist. Die Haube 1 kann wie gezeichnet mit nach unten weisender Öffnung über ein elektronisches Gerät wie z. B. ein Mobiltelefon 2 gestülpt werden, während dieses z. B. auf einer Möbeloberfläche liegt. Die Haube 1 schirmt also das Mobiltelefon 2 akustisch und optisch ab, sodass in dem Mobiltelefon 2 verbaute Mikrofone, Helligkeitssensoren und Kameras keine Signale von außerhalb der Haube 1 erfassen können. Für Tonsignale kann das konkret bedeuten, dass die Schalldämmung jedenfalls der Erfassung menschlicher Stimmen bei normaler Lautstärke und in einem Abstand von einem halben Meter oder einem Meter so dämpft, dass keine Spracherkennung mehr möglich ist. Nutzer sind also vor einer ungewollten Erfassung im Sinne eines Zusehens oder Belauschens geschützt.

Die Schutzvorrichtung weist ferner eine elektronische Einrichtung 3.1 zur Ermöglichung der Benutzung und Bedienung des Mobiltelefons 2 auf, welche Einrichtung 3.1 ein zur Erfassung von Außensignalen ausgelegtes Mikrofon 4.1 und einen bzgl. der Haube 1 nach innen gerichteten Lautsprecher 5.1 aufweist. Damit kann die Schutzvorrichtung z. B. eine Sprachbedienungsfunktion ausführen und es einem Nutzer erlauben, Sprachbefehle für das Mobiltelefon 2 durchzugeben, indem sie zunächst von dem Mikrofon 4.1 erfasst und dann von dem Lautsprecher 5 nach Verstärkung nach innen weitergeben werden, wo sie z. B. an sich unverändert von dem Mobiltelefon 2 erfasst werden können. Dazu kann die Schutzvorrichtung über einen Schalter oder, eleganter, über einen in der elektronischen Einrichtung 3.1 der Schutzvorrichtung abgespeicherten und durch eine Spracherkennung darin entschlüsselten Einschaltbefehl in Funktion gesetzt werden.

Z. B. könnte also der Benutzer das Wort "ein" laut und deutlich aussprechen, woraufhin die elektronische Einrichtung 3.1 in Betrieb geht und nachfolgende Tonsignale nach innen überträgt. Wenn ohnehin eine Spracherkennung vorhanden ist, kann dies auch insoweit modifiziert sein, dass nur als Sprachbefehle erkannte Worte weitergeben werden, sodass auch in diesem Zustand nur die Tonsignale zum Mobiltelefon 2 gelangen, die für dessen Bedienung tatsächlich gedacht und geeignet sind, während andere Sprachteile weiterhin abgeschirmt sind. Das setzt aber voraus, dass die elektronische Einrichtung 3.1 den Sprachbefehlvorrat des Mobiltelefons 2 enthält oder gelernt hat, sodass in einer einfacheren Variante nach dem akustischen Einschaltbefehl grundsätzlich Tonsignale durchgelassen werden, bis wieder ein Ausschaltbefehl erfolgt. Dieser kann z. B. durch das Wort "aus" erfolgen oder durch ein anderes im Sprachbefehlvorrat des Mobiltelefons 2 nicht auftretendes Befehlswort. Alternativ oder zusätzlich kann die elektronische Einrichtung 3.1 nach Ablauf einer voreingestellten Zeit von z. B. 30 Sekunden durch eine Schaltuhr außer Funktion gesetzt werden.

Die Schutzvorrichtung weist zusätzlich einen Stromanschluss oder einen Akku (oder z. B. auch Fotovoltaikzellen auf ihrer Oberfläche), einen Prozessor und einen Datenspeicher auf. Abgesehen von der Möglichkeit einer Sprachsteuerung der Schutzvorrichtung selbst kann sie natürlich auch durch eine Tastatur, ein Touchfeld, Schalter oder eine Gestensteuerung bedient werden. Auch ist eine Nutzeridentifizierung über Stimme oder Bild möglich.

Ferner kann es z. B. bei einer Haube auch eine positionsabhängige Aktivierung geben, z. B. könnte die Schutzvorrichtung durch Aufsetzen auf z. B. ein Mobiltelefon (Öffnung der Haube nach unten) ihre Schutzfunktion entfalten und in einer anderen Lage (z. B. Öffnung der Haube nach oben) gänzlich ausgeschaltet sein, also wenn gar kein Gerät darunter liegt.

Die Haube 1 kann natürlich abhängig vom konkret in Betracht gezogenen Gerät 2 unterschiedlich geformt oder unterschiedlich groß sein, z. B. also auch einen Computer abdecken und dementsprechend größer sein. Natürlich muss die elektronische Einrichtung 3.1 mit dem Mikrofon 4.1 und dem Lautsprecher 5.1 nicht oben und auch nicht mittig angeordnet sein. Sie könnte z. B. auch am Rand unten liegen und z. B. könnte die Haube 1 dabei oder unabhängig davon einen etwas fester ausgeführten umlaufenden Rand aufweisen, um eine gute und dichte Auflage auf einem planen Untergrund zu ermöglichen.

Figur 2 zeigt ein weiteres Ausführungsbeispiel, bei dem die elektronische Einrichtung 3.2 erneut ein Mikrofon 4.2 und einen Lautsprecher 5.2 aufweist. Sie ist aber dazu ausgelegt, aus der Umgebung über das Mikrofon 4.2 erfasste Schallsignale zur Unterstützung der Funktion der Haube 1 nach innen durch gegenphasigen "Antischall" zu unterdrücken, nämlich über den Lautsprecher 5.2. Das soll durch die beiden eingezeichneten Wellenlinien symbolisiert sein, von denen die eine aus dem Lautsprecher 5.2 stammt und die andere, wenngleich geschwächt, aus der Umgebung und durch die Haube 1 aufgenommen wird. Die beiden Wellen sollen sich im Inneren der Haube 1 destruktiv überlagern, sodass das Mobiltelefon 2 oder ein anderes Gerät keine Schallsignale mehr empfangen kann, die in irgendeiner Form entschlüsselbar sind.

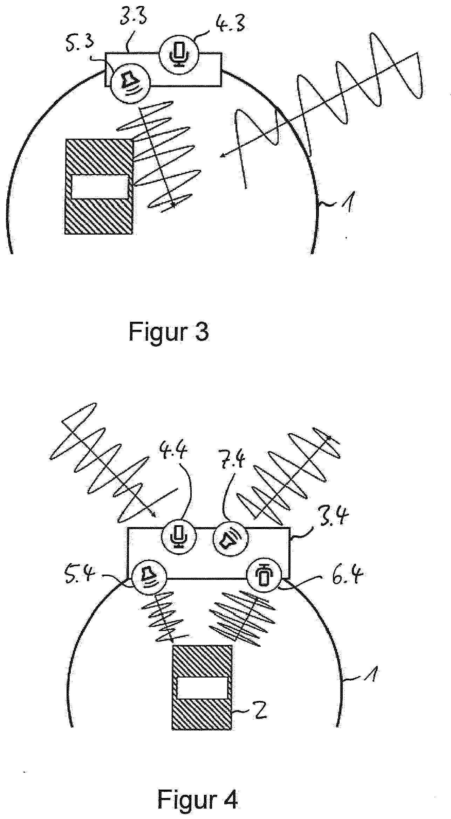

Grundsätzlich könnte diese Variante gemäß Figur 3 auch etwas einfacher aufgebaut sein und nach innen über den Lautsprecher 5.3 schlichtweg Störsignale abgeben, in denen sich der durch die Haube 1 unterdrückte Schall aus der Umgebung selbst in solcher Weise verliert, dass er nicht mehr zu entschlüsseln ist. Dies ist in Figur 3, die im Übrigen Figur 2 weitgehend ähnelt, durch die von Figur 2 abweichenden Wellenformen symbolisiert. Störsignale können auch andere als z. B. Rauschen sein, nämlich Geräusche oder Bilder oder Helligkeitswerte, die z. B. gespeichert sind und tatsächliche eine Umgebungserfassung vortäuschen können, wobei sie nicht Signale der wirklichen Umgebung sind. Insoweit kann auch verhindert werden, dass bei einer etwaigen Überwachung die Funktion der erfindungsgemäßen Schutzvorrichtung ohne Weiteres seitens Überwachender Automatismen oder Personen zu bemerken ist. Auch umgekehrt können Signale seitens des Geräts, z. B. Schallsignale Weck-, Vorlese- oder Benachrichtigungsfunktionen trotz der Schalldämmung nach außen weitergegeben werden.

Figur 4 zeigt ein weiteres Beispiel mit einer dämmenden Haube 1 und einem Mobiltelefon 2, hier jedoch mit einer elektronischen Einrichtung 3.4, die zusätzlich zum vorher zu den Figuren 2 und 3 Erläuterten über ein weiteres Mikrofon 6.4 nach innen auch Schallsignale des Mobiltelefons 2 aufnehmen kann (oder eines anderen Geräts). Diese können dann über einen weiteren Lautsprecher 7.4 nach außen übertragen werden. In diesem Fall können also "Gespräche" über die elektronische Einrichtung 3.4 geführt werden, z. B. kann also der Benutzer mit dem Mobiltelefon telefonieren, ohne es unter der Haube 1 hervorzunehmen. Außerdem können z. B. Weckfunktionen, Benachrichtigungen, Vorlesefunktionen und Ähnliches oder Musikwiedergabe stattfinden. Dies gilt bei diesem Ausführungsbeispiel sowohl hinsichtlich der (alleinigen) Schalldämmung der Haube 1 als auch hinsichtlich der beiden weiteren Möglichkeiten des Antischalls und der Störsignale. Analoge Ausführungsbeispiele sind natürlich denkbar für die Erfassung einer Bildanzeige durch das Gerät 2 durch eine Kamera der Schutzvorrichtung (und Weitergabe durch einen externen Monitor an den Nutzer) oder auch nur einfache Erfassung eines Lichtsignals des Geräts 2 und entsprechende Weitergabe nach außen, erneut als Lichtsignal oder auch umgewandelt in ein Schallsignal oder anderweitiges Signal.

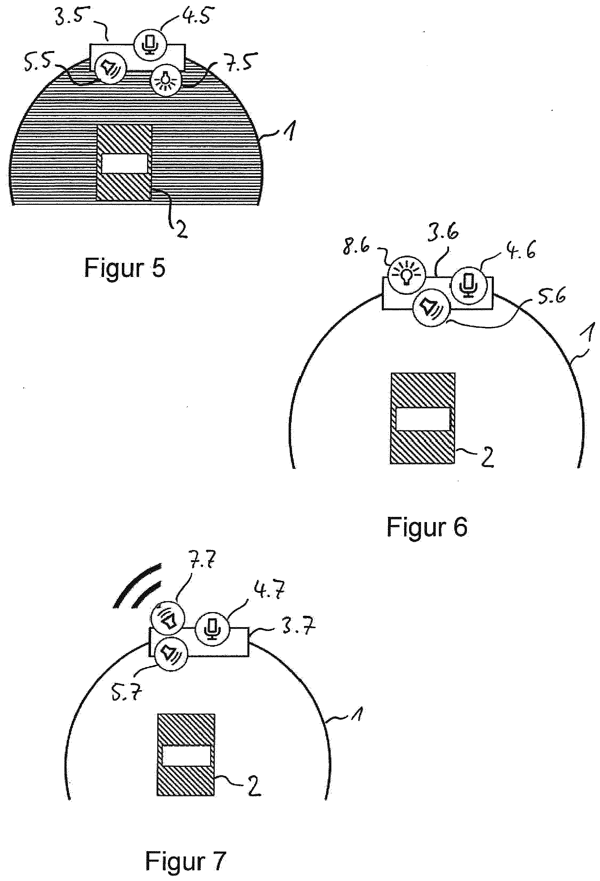

In Figur 5 gibt es zusätzlich eine nach innen gerichtete Lichtquelle, etwa eine LED 7.5, die z. B. zu einer Statussignalisierung genutzt werden kann, indem innerhalb der Haube 1 Licht eingeschaltet wird oder Licht bestimmter Farbe eingeschaltet wird. Dies kann durch Fenster oder eine gewisse Transluzenz des Materials der Haube 1 von außen sichtbar sein. Natürlich kann die Lichtquelle 7.5 auch nach außen gerichtet sein mit ähnlichem Hintergrund. Die Schraffur in Figur 5 soll jedenfalls von der LED 7.5 abgegebenes Licht im Innern der Haube 1 darstellen, etwa als Symbol für die Bedienbarkeit des Mobiltelefons 2, also die Überbrückungsfunktion der elektronischen Einrichtung 3.5.

Eine Variante mit Lichtquelle nach außen zeigt Figur 6, nämlich mit der LED 8.6.

Figur 7 zeigt eine Variante zu Figur 6, wobei die LED 8.6 ersetzt ist durch einen Lautsprecher 7.7. Dieser kann eine Statusinformation z. B. durch einen Piepton oder ein bestimmtes Signalwort nach außen abgeben und natürlich auch mit einer Lichtquelle kombiniert sein.

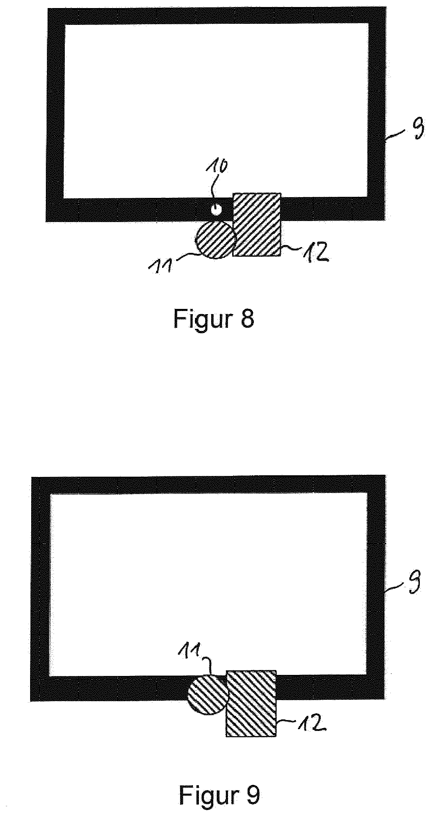

Die Figuren 8 und 9 zeigen ein Ausführungsbeispiel, bei dem statt des Mobiltelefons 2 ein Fernsehgerät 9 (mit "smarten" Funktionen) vorgesehen ist. Hier kann es praktisch sein, nicht das ganze großformatige Fernsehgerät 9 mit einer Haube abzudecken, sondern nur die relevanten Bereiche, nämlich hier eine Kamera 10 des Fernsehgeräts an dessen mittlerer unterer Front. Dazu weist die erfindungsgemäße Vorrichtung eine bewegliche Klappe 11 auf, mit der gemäß Figur 9 die Kamera 10 abgedeckt werden kann oder gemäß Figur 8 frei gehalten werden kann. Die Klappe 11 ist also beweglich, und zwar durch einen Stellmotor in der elektronischen Einrichtung 12, die im Übrigen natürlich auch noch analoge Einrichtungen zur Abdeckung eines Mikrofons (ausgestattet wie eines der vorherigen Ausführungsbeispiele) aufweisen kann. Z. B. kann die Schutzvorrichtung in diesem Fall angeklebt werden oder über eine Clipverbindung (oder auch Schraubverbindung) mit dem Gerät verbunden werden, das sie betrifft.

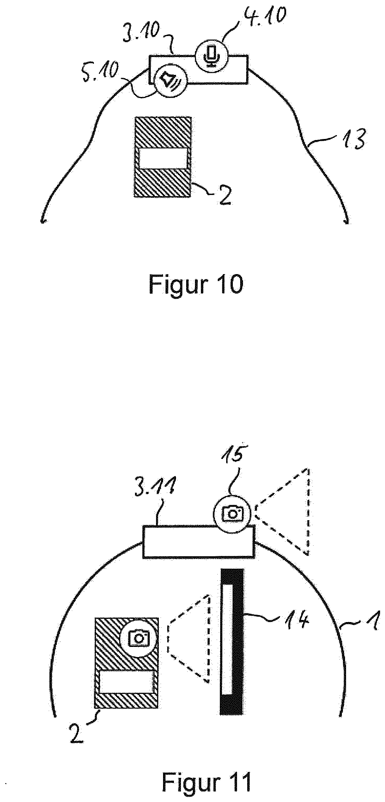

Figur 10 entspricht Figur 1, wobei jedoch die Haube 1 ersetzt ist durch eine sackartige flexible Abdeckung 13 mit nach unten gerichteter Öffnung. Diese kann in ihrer Form und in gewissem Umfang auch (durch Zusammenraffen oder auch durch elastische Eigenschaften) in ihrer Größe an unterschiedliche Geräte angepasst werden. Sie kann z. B. etwas zusammengerafft über ein Mobiltelefon 2 gelegt werden, gleichzeitig aber auch einen ganzen Computer aufnehmen. Beispielsweise kann sie aus gut schalldämmenden textilen Materialien aufgebaut sein, unter anderem mit schalldämmender Schaumstofffüllung.

Das letzte Ausführungsbeispiel zeigt Figur 11. Dort gibt es in einer Haube 1 ein Mobiltelefon 2, das (wie üblich) über eine Kamera verfügt. Dementsprechend kann in der Haube 1 als Teil der erfindungsgemäßen Vorrichtung ein Display 14 vorgesehen sein, das mit der elektronischen Einrichtung 3.11 darüber über Kabel oder auch durch feste Montage verbunden ist. Die elektronische Einrichtung 3.11 verfügt ihrerseits über eine Kamera 15. Analog wie für die Schallsignale zuvor diskutiert, kann die Schutzvorrichtung mit der Kamera 15 aufgenommene Bildsignale über das Display 14 zu dem Mobiltelefon 2 schicken, wenn das gewünscht ist, und ansonsten die Kamera des Mobiltelefons 2 durch die Sichtabdeckung der Haube 1 quasi außer Funktion setzen. Auch diese Variante lässt sich natürlich leicht mit einer der vorherigen kombinieren. Insbesondere könnte, wenn z. B. nur ein Helligkeitssensor vorgesehen wäre, eine Lichtquelle wie die LED 7.5 als Störsignalquelle fungieren. Außerdem könnte man sich hier eine bidirektionale Variante mit auch nach innen einer weiteren Kamera und nach außen einer entsprechenden Anzeige über einen weiteren Monitor vorstellen.

Grundsätzlich kann bei allen Ausführungsformen die erfindungsgemäße Schutzvorrichtung ein von außen angenommenes (Ton- oder Bild-) Signal zwischenspeichern und dann z. B. in ein für das betroffene Gerät geeigneteres Signal umwandeln, z. B. einen Steuerbefehl in einer Befehlsliste des Gerätes. Alternativ oder zusätzlich könnte auch eine Filterung danach erfolgen, ob es sich bei dem empfangenen Signal überhaupt um ein Bedienungssignal oder ein zur Weitergabe an das Gerät geeignetes Signal handelt, um Störungen oder eine ungewollte Weitergabe auszuschließen, bspw. von Hintergrundgesprächen. Wenn eine Veränderung von Signalen oder deren Filterung nicht in Betracht kommt, kann eine Zwischenspeicherung auch entfallen und können z. B. Schall- oder Bildsignale auch in Echtzeit weitergegeben werden.

Bei allen Varianten kann die Ausschaltung (also Wiederherstellung des Schutzzustandes) statt oder neben einer entsprechenden Bedientätigkeit (z. B. Sprachbefehl) des Nutzers auch durch Ablauf einer vorgegebenen Zeit erfolgen. Die automatische Wiederausschaltung erfolgt nach der eingestellten Zeit, wenn in dieser Zeit keine Sprachbefehle erfasst wurden. Sie läuft also vorzugsweise bei fortwährender Benutzung nicht ab.

Generell sind vorzugsweise die verschiedenen Betriebsparameter der Schutzvorrichtung durch den Nutzer einstellbar, bspw. die Empfindlichkeit bzgl. Signalstärken, etwa eine Mikrofonempfindlichkeit, die Lautstärke von abgestrahlten Schallsignalen oder Störsignalen, die Helligkeit oder der Kontrast erzeugter Bildsignale und entsprechende Empfindlichkeiten einer Kamera oder eines Helligkeitssensors, die Zeitverzögerung bis zum automatischen Wiederausschalten, eine Sprachbefehlsliste etc..

## Patentansprüche

1. Schutzvorrichtung zum Unterbinden der Erfassung von Signalen einer Umgebung durch einen Sensor (10) eines elektronischen Geräts (2, 9),
mit:
einer Abdeckung (1, 11, 13) für zumindest den Sensor (10), welche durch den Sensor (10) erfassbare Signale schwächt, und
einer elektronischen Einrichtung (3.1-3.11), die ansprechend auf eine Steuerung eines Nutzers eine Benutzung des elektronischen Geräts (2, 9) mittels des Sensors (10) ermöglichen kann.

2. Schutzvorrichtung nach Anspruch 1, bei der die Einrichtung (3.1-3.11) zum Ermöglichen der Benutzung einen weiteren Sensor (4.1-4.10, 15) zur Signalerfassung von Signalen außerhalb der Abdeckung (1.13) und eine Einrichtung (5.1-5.10, 14) zur Weitergabe von den erfassten Signalen entsprechenden Signalen an den Sensor des elektronischen Geräts (2) aufweist und dazu ausgelegt ist, damit die Signalschwächung durch die Abdeckung (1, 13) zu überbrücken und die Signalerfassung durch den Sensor zu ermöglichen.

3. Schutzvorrichtung nach Anspruch 1 oder 2 mit einer Störsignaleinrichtung (5.2, 5.3) zur Verhinderung der Erfassung von Umgebungssignalen durch den Sensor des elektronischen Geräts (2), wobei die Einrichtung (3.2, 3.3) zum Ermöglichen der Benutzung durch einen Nutzer aktiviert werden, daraufhin die Störsignaleinrichtung 5.2, 5.3) ausschalten und somit die Signalerfassung durch den Sensor ermöglichen kann.

4. Schutzvorrichtung nach einem der vorstehenden Ansprüche, bei der die Einrichtung zum Ermöglichen der Benutzung dazu ausgelegt ist, Steuerbefehle des Nutzers zu erfassen und in veränderte Steuerbefehle umzuwandeln und letztere an den Sensor weiterzugeben.

5. Schutzvorrichtung nach einem der vorstehenden Ansprüche, bei der die Abdeckung (1, 13) eine Umhüllung (1, 13) für das elektronische Gerät (2) ist.

6. Schutzvorrichtung nach einem der Ansprüche 1 bis 4, bei der die Abdeckung (11) dazu ausgelegt ist, nur einen den Sensor (10) aufweisenden Bereich des elektronischen Geräts (9) abzudecken.

7. Schutzvorrichtung nach Anspruch 2, optional auch mit einem weiteren der vorhergehenden Ansprüche, bei welcher der weitere Sensor ein Mikrofon (4.1-4.10) zur Erfassung von Schallsignalen aus der Umgebung und die Einrichtung zum Ermöglichen ein Lautsprecher (5.1-5.10) zur Weitergabe von Schallsignalen zu dem Sensor des elektronischen Geräts (2), nämlich einem Mikrofon, ist.

8. Schutzvorrichtung nach Anspruch 2, optional auch mit einem weiteren der vorhergehenden Ansprüche, bei welcher der weitere Sensor ein Lichtsensor oder eine Kamera (15) zur Erfassung von Licht- oder Bildsignalen aus der Umgebung und die Einrichtung zum Ermöglichen eine Lichtquelle oder ein Monitor (14) zur Weitergabe von Licht- oder Bildsignalen zu dem Sensor des elektronischen Geräts (2), nämlich einem Lichtsensor oder einer Kamera, ist.

9. Schutzvorrichtung nach einem der vorhergehenden Ansprüche, bei der die Einrichtung zum Ermöglichen eine Sprach- und/oder Gestensteuereinrichtung aufweist und vom Nutzer über Sprachbefehle und/oder Gesten adressiert werden kann.

10. Schutzvorrichtung nach Anspruch 2, optional in Verbindung mit einem weiteren der vorstehenden Ansprüche, bei der die Einrichtung zum Ermöglichen der Benutzung (3.4) eine Einrichtung (6.4) zum Erfassen von Signalen des elektronischen Geräts (2) innerhalb der Abdeckung (1) aufweist, insbesondere ein Mikrofon (6.4) und/oder eine Kamera, und eine Einrichtung (7.4) zur Abgabe von Signalen nach außen, insbesondere einen Lautsprecher (7.4) und/oder einen Monitor, und dazu ausgelegt ist, dadurch eine bidirektionale Kommunikation zwischen dem elektronischen Gerät (2) und dem Nutzer zu ermöglichen.

11. Schutzvorrichtung nach einem der vorhergehenden Ansprüche, bei der die Einrichtung zum Ermöglichen eine Zeitschaltfunktion aufweist, durch welche diese nach Ablauf einer bestimmten Zeit ausgeschaltet und damit die Umgebungserfassung durch den Sensor wieder unterbunden wird.

12. Schutzvorrichtung nach einem der vorhergehenden Ansprüche mit einer elektronischen Schnittstelle zum Aufspielen von Updates.

13. Schutzvorrichtung nach einem der vorhergehenden Ansprüche, die grundsätzlich offline ausgestaltet ist, also ohne Einrichtung zur Internetverbindung.

14. Schutzvorrichtung nach einem der vorhergehenden Ansprüche, bei der zumindest Teile der Abdeckung (13) formveränderlich sind und eine Anpassung an unterschiedlich große oder unterschiedlich geformte elektronische Geräte (2) erlauben.

15. Verwendung einer Schutzvorrichtung nach einem der vorstehenden Ansprüche für zumindest eines der folgenden elektronischen Geräte: Mobiltelefone (2), mobile digitale Assistenten und Computer, nicht mobile Computer, elektronische Brillen mit Kamera und/oder Mikrofon, Monitore, Fernsehgeräte (9), Radios, Spielekonsolen, Küchengeräte, Maschinen, Werkzeug, Spielzeug, Lampen oder Leuchten, Heizgeräte, Alarmanlagen.
